(19) Europäisches Patentamt
European Patent Office
Office européen des brevets

(11) **EP 2 672 489 B1**

(12) # EUROPEAN PATENT SPECIFICATION

(45) Date of publication and mention
of the grant of the patent:
**14.03.2018 Bulletin 2018/11**

(51) Int Cl.:
***G21B 3/00*** (2006.01)

(21) Application number: **11857867.3**

(86) International application number:
**PCT/CN2011/081670**

(22) Date of filing: **02.11.2011**

(87) International publication number:
**WO 2012/103759 (09.08.2012 Gazette 2012/32)**

(54) **METHOD OF LIGHT CONTROL NUCLEAR FUSION**

VERFAHREN FÜR LICHTGESTEUERTE KERNFUSION

PROCÉDÉ DE FUSION NUCLÉAIRE COMMANDÉ PAR LA LUMIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.02.2011 CN 201110037019**

(43) Date of publication of application:
**11.12.2013 Bulletin 2013/50**

(73) Proprietor: **Gong, Bingxin
Guangdong 510800 (CN)**

(72) Inventor: **Gong, Bingxin
Guangdong 510800 (CN)**

(74) Representative: **Peter, Julian
Staeger & Sperling
Partnerschaftsgesellschaft mbB
Sonnenstrasse 19
80331 München (DE)**

(56) References cited:
CN-A- 1 060 920          CN-A- 1 309 398
CN-A- 102 142 285       JP-A- 2000 261 083
US-A1- 2002 181 655

• DITMIRE ET AL.: "Nuclear fusion from explosions
of femtosecond laser-heated deuterium
clusters", NATURE, vol. 398, no. 6727, 8 April
1999 (1999-04-08), pages 489-492, XP002738364,
UK ISSN: 0028-0836
• IMASAKI ET AL.: "A new approach of laser
induced nuclear fusion in plasma byintense laser
propagation", JOURNAL OF PHYSICS:
CONFERENCE SERIES - THE FIFTH
INTERNATIONAL CONFERENCE ON INERTIAL
FUSION SCIENCES AND APPLICATIONS
(IFSA2007)9-14 SEPTEMBER, 2007, KOBE,
JAPAN, vol. 112, no. Part 4, 42071, 12 June 2008
(2008-06-12), pages 1-4, XP002738365, DOI:
10.1088/1742-6596/112/4/042071

**Description**

CROSS REFERENCE TO RELATED APPLICATION

This application claims priority to PCT application No. PCT/CN2011/081670 filed Nov. 02, 2011 .

FIELD OF THE INVENTION

This invention relates to the field of the controlled nuclear fusion.

BACKGROUND OF THE INVENTION

Research into controlled fusion, with the aim of producing fusion power for the production of electricity, has been conducted for over 60 years. A method of controlling a laser-induced nuclear fusion, comprising the steps of

- irradiating an atomic cluster with laser light so as to create a cloud of nuclei and electrons;
- adjusting the laser power and frequency so that said cloud has a predetermined nuclei and electron density and a predetermined kinetic energy is imparted to said nuclei and/or electrons in order to enhance their fusion by mutual collisions. At present, controlled fusion reactions have been unable to produce break-even (self-sustaining) controlled fusion reactions.

An example is disclosed in DITMIRE ET AL.: "Nuclear fusion from explosions of femtosecond laser-heated deuterium clusters", NATURE, vol. 398, no. 6727, 8 April 1999 (1999-04-08), pages 489-492, UK ISSN: 0028-0836

SUMMARY OF THE INVENTION

The present invention is a method for producing break-even (self-sustaining) controlled nuclear fusion energy. The nuclear fusion is controlled by controlling the kinetic energy and density of the nuclei or electrons, and by controlling the electric field intensity and the frequency of the incident light.

The light controlled fusion is based on the following principle: when a light is directed at a charged particle, the charged particle will perform a simple harmonic oscillation and will radiate an electromagnetic wave; the charged particle's simple harmonic oscillation can be considered as an oscillating electric dipole; when the electric moment of the two oscillating electric dipoles are acting along the same line and in the same direction, there will be an attraction force between the two oscillating electric dipoles.

Suppose the distance between two oscillating nuclei is $r$, $r$ being the distance between two oscillating nuclei when they are colliding; suppose the light which is directed at the nuclei is produced by the oscillating electric dipole.

In the far-zone fields of the oscillating electric dipole which has charge $Q$ and amplitude $a$, the electric field intensity $\overrightarrow{E(t)}$ is proportional to the 2nd power of the angular frequency $\omega$ (Cheng, 1989a),

$$\overrightarrow{E(t)} = \frac{Qa}{4\pi\varepsilon_0 c^2 R}\,\omega^2 \cos\omega t \qquad (1)$$

where $\varepsilon_0$ is the dielectric constant, $c$ is the speed of light, and $R$ is the distance between the point of observation and the centre of the oscillating electric dipole.

Let

$$A = \frac{Qa}{4\pi\varepsilon_0 c^2 R} \qquad (2)$$

The Eq. (1) can then be changed into

$$\overrightarrow{E(t)} = A\omega^2 \cos\omega t \qquad (3)$$

This electric field intensity $\overrightarrow{E(t)}$ will cause the nuclei to perform a simple harmonic oscillation. The nucleon's simple harmonic oscillation can be considered as an oscillating electric dipole.

Suppose the nucleon 1 has a charge $q_1$, the angular frequency of the simple harmonic oscillation is $\omega$, and its amplitude is $l_1$.

In the near-zone fields of the oscillating nucleon 1, the electric field intensity components in spherical coordinate are $\overrightarrow{E_r(t)}$ and $\overrightarrow{E_\theta(t)}$, the magnetic field intensity component in spherical coordinate is $\overrightarrow{H_\phi(t)}$ (Cheng, 1989b),

$$\overrightarrow{E_r(t)} = \frac{q_1 l_1 \cos\theta}{2\pi\varepsilon_0 r^3}\cos\omega t \vec{r} \quad (4)$$

$$\overrightarrow{E_\theta(t)} = \frac{q_1 l_1 \sin\theta}{4\pi\varepsilon_0 r^3}\cos\omega t \vec{\theta} \quad (5)$$

$$\overrightarrow{H_\phi(t)} = \frac{\omega q_1 l_1 \sin\theta}{4\pi r^2}\cos(\omega t + \frac{\pi}{2})\vec{\phi} \quad (6)$$

where $r$ is the distance between the point of observation and the centre of the oscillating nucleon 1, $r \gg l_1$, $r \ll \lambda$, and where $\lambda$ is the wavelength of the incident light.

Suppose the oscillating nucleon 2 lies at the point of observation, which is in the near-zone fields of the oscillating nucleon 1. $r$ is then the distance between the two oscillating nuclei when they are colliding.

When the electric field intensity $\overrightarrow{E_r(t)}$ is in the direction along $\vec{r}$, $\theta=0$, therefore

$$\overrightarrow{E_r(t)} = \frac{q_1 l_1}{2\pi\varepsilon_0 r^3}\cos\omega t \vec{r} \quad (7)$$

$$\overrightarrow{E_\theta(t)} = 0 \quad (8)$$

$$\overrightarrow{H_\phi(t)} = 0 \quad (9)$$

The electric field intensity $\overrightarrow{E(t)}$ and $\overrightarrow{E_r(t)}$ will also cause the nucleon 2 to perform a simple harmonic oscillation, so the nucleon 2 can be considered as a bound oscillator of mass $m_2$ and charge $q_2$, its angular frequency of the simple harmonic oscillation is $\omega$, and its amplitude is $l_2$.

The nucleon 2 will oscillate in the direction of $\vec{r}$, according to the equation of motion

$$\ddot{x} + \gamma\dot{x} + \omega_0^2 x = q_2 A\omega^2 \cos\omega t \vec{r} + \frac{q_2 q_1 l_1}{2\pi\varepsilon_0 r^3}\cos\omega t \vec{r} \quad (10)$$

where $\omega_0$ is the natural frequency of the nucleon 2, and $\gamma$ is the coefficient of damping (Panofsky and Phillips, 1962), for convenience one can set

$$\gamma = \frac{q_2^2 \omega^2}{6\pi\varepsilon_0 m_2 c^3} \quad (11)$$

Because $\gamma \ll \omega$, one can obtain $x$,

$$x = \frac{q_2}{m_2}\frac{1}{\sqrt{(\omega_0^2 - \omega^2)^2 + \omega^2\gamma^2}}(A\omega^2 + \frac{q_1 l_1}{2\pi\varepsilon_0 r^3})\cos\omega t \vec{r} = l_2 \cos\omega t \vec{r} \quad (12)$$

$$l_2 = \frac{q_2}{m_2} \frac{1}{\sqrt{(\omega_0^2 - \omega^2)^2 + \omega^2 \gamma^2}} (A\omega^2 + \frac{q_1 l_1}{2\pi\varepsilon_0 r^3}) \qquad (13)$$

The nucleon 2's simple harmonic oscillation can be considered also as an oscillating electric dipole.

By defining $\vec{P_2}$ as the nucleon 2's electric dipole moment with magnitude $q_2 l_2 \cos \omega t$ and direction along $\vec{r}$ such as

$$\vec{P_2} = q_2 l_2 \cos \omega t \vec{r} = \frac{q_2^2}{m_2} \frac{1}{\sqrt{(\omega_0^2 - \omega^2)^2 + \omega^2 \gamma^2}} (A\omega^2 + \frac{q_1 l_1}{2\pi\varepsilon_0 r^3}) \cos \omega t \vec{r} \qquad (14)$$

The electric field intensity $\overline{E(t)}$ has nothing to do with the distance of $r$, as it will not give the oscillating nucleon 2 the force which acts along the direction of $\vec{r}$.

The near-zone electric field intensity $\overline{E_r(t)}$ of the oscillating nucleon 1 will give the oscillating nucleon 2 a force $F$ which acts along the direction of $\vec{r}$.

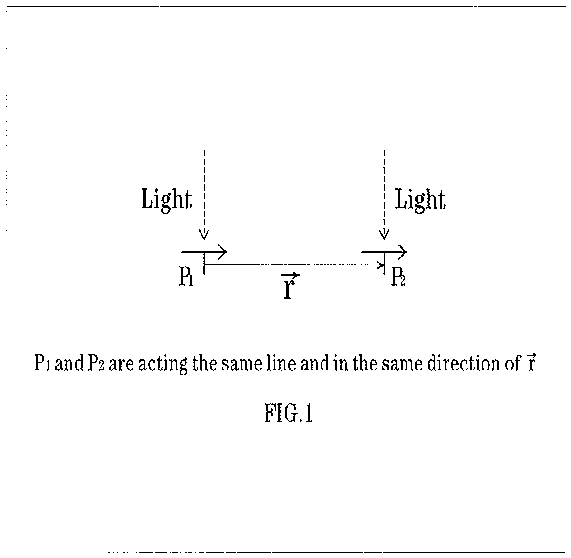

When the electric field intensity of the incident light and the electric dipole moments of the two oscillating nuclei are acting along the same line and in the same direction of $\vec{r}$, as shown in FIG.1,

$$F = q_2 l_2 \cos \omega t (\vec{r} \cdot \nabla \overline{E_r(t)}) = \vec{P_2} \cdot \nabla \overline{E_r(t)} \qquad (15)$$

and $\nabla = \vec{r} \dfrac{\partial}{\partial r}$,

$$F = -\frac{1}{\sqrt{(\omega_0^2 - \omega^2)^2 + \omega^2 \gamma^2}} (\frac{3A q_2^2 q_1 l_1 \omega^2 \cos^2 \omega t}{4 m_2 \pi\varepsilon_0 r^4} + \frac{3 q_2^2}{8 m_2} \frac{q_1^2 l_1^2 \cos^2 \omega t}{\pi^2 \varepsilon_0^2 r^7}) \qquad (16)$$

This shows that $F$ is the attraction force.

The Coulomb repulsion between two oscillating nuclei is $F_f$

$$F_f = \frac{q_1 q_2}{4\pi\varepsilon_0 R_f^2} \qquad (17)$$

To fuse together, it needs

$$R_f \le 10^{-15} m \qquad (18)$$

The interaction energy between the oscillating nucleon 1 and the oscillating nucleon 2 is $W$ (Jackson, 1998),

$$W = \vec{P_2} \cdot \overline{E_r(t)} = \frac{1}{\sqrt{(\omega_0^2 - \omega^2)^2 + \omega^2 \gamma^2}} (\frac{A q_2^2 q_1 l_1 \omega^2 \cos^2 \omega t}{2 m_2 \pi\varepsilon_0 r^3} + \frac{q_2^2}{4 m_2} \frac{q_1^2 l_1^2 \cos^2 \omega t}{\pi^2 \varepsilon_0^2 r^6}) \qquad (19)$$

The Coulomb barrier between two oscillating nuclei is $W_f$

$$W_f = \frac{q_1 q_2}{4\pi\varepsilon_0 R_f} \qquad (20)$$

When $W$ is greater than the Coulomb barrier $W_f$ between two oscillating nuclei, the two oscillating nuclei will fuse together.

Suppose an electron lies at the point of observation, which is in the near-zone fields of the oscillating nucleon 1.

For the electron of mass $m_e$ and negative charge of $q_e$, the Eq. (13) will be changed into

$$l_e = \frac{q_e}{m_e} \frac{1}{\sqrt{(\omega_0^2 - \omega^2)^2 + \omega^2 \gamma^2}} (A\omega^2 + \frac{q_1 l_1}{2\pi\varepsilon_0 r^3}) \quad (21)$$

where $l_e$ is the amplitude of the oscillating electron.

By defining $\vec{P_e}$ as the oscillating electron's electric dipole moment with magnitude $q_e l_e \cos \omega t$ and direction along $\vec{r}$ such as

$$\vec{P_e} = q_e l_e \cos \omega t \vec{r} = \frac{q_e^2}{m_e} \frac{1}{\sqrt{(\omega_0^2 - \omega^2)^2 + \omega^2 \gamma^2}} (A\omega^2 + \frac{q_1 l_1}{2\pi\varepsilon_0 r^3}) \cos \omega t \vec{r} \quad (22)$$

$$\overrightarrow{E_r(t)} = \frac{q_1 l_1}{2\pi\varepsilon_0 r^3} \cos \omega t \vec{r} \quad (7)$$

The near-zone electric field intensity $\overrightarrow{E_r(t)}$ of the oscillating nucleon 1 will give the oscillating electron a force $\vec{F_e}$ which acts along $\vec{r}$,

$$F_e = q_e l_e \cos \omega t (\vec{r} \cdot \nabla \overrightarrow{E_r(t)}) = \vec{P_e} \cdot \nabla \overrightarrow{E_r(t)} \quad (23)$$

The electric field intensity of the incident light and the electric dipole moment of the oscillating nucleon 1 and the electric dipole moment of the oscillating electron are acting along the same line.

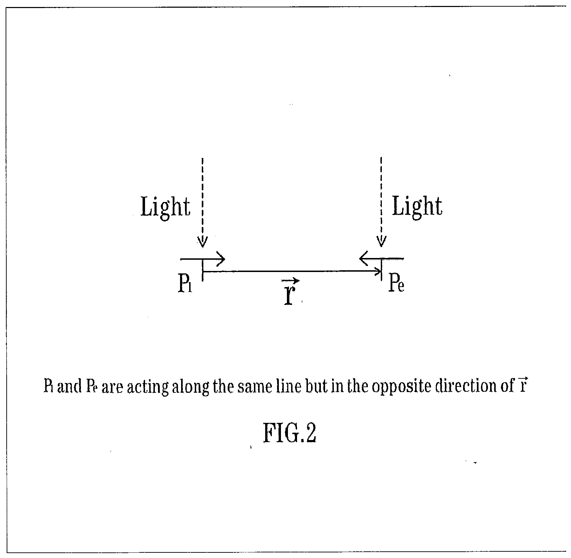

Because $q_e$ has a negative charge, the electric dipole moment of the oscillating nucleon 1 and the electric dipole moment of the oscillating electron are acting along the same line but in the opposite direction of $\vec{r}$, as shown in FIG. 2 ,

$$F_e = \frac{1}{\sqrt{(\omega_0^2 - \omega^2)^2 + \omega^2 \gamma^2}} (\frac{3A q_e^2 q_1 l_1 \omega^2 \cos^2 \omega t}{4 m_e \pi \varepsilon_0 r^4} + \frac{3 q_e^2}{8 m_e} \frac{q_1^2 l_1^2 \cos^2 \omega t}{\pi^2 \varepsilon_0^2 r^7}) \quad (24)$$

It shows that $F_e$ is a repulsive force.

The interaction energy between the oscillating electron and the oscillating nucleon 1 is $W_e$

$$W_e = \vec{P_e} \cdot \overrightarrow{E_r(t)} \quad (25)$$

$$W_e = \frac{1}{\sqrt{(\omega_0^2 - \omega^2)^2 + \omega^2 \gamma^2}} (\frac{A q_e^2 q_1 l_1 \omega^2 \cos^2 \omega t}{2 m_e \pi \varepsilon_0 r^3} + \frac{q_e^2}{4 m_e} \frac{q_1^2 l_1^2 \cos^2 \omega t}{\pi^2 \varepsilon_0^2 r^6}) \quad (26)$$

When the electron beam and the nucleon beam are colliding with each other, the high frequency light will be directed at the electron beam and the nucleon beam, there will be a repulsion force between the electron and the nucleon, when the repulsion force is greater than the Coulomb repulsion between the two nuclei, the light nuclei will fuse together.

From the Eqs. (2), (19), and (26), one can know that $W$ and $W_e$ increase with the decrease of $r$ and the increase of $A$ and $\omega$, $A$ increases with the increase of the charge $Q$ and the amplitude $a$.

The invention is based on the above principle.

The invention generally comprises the following steps and requirements:

Because $W$ and $W_e$ increase with the decrease of $r$ and the increase of $A$ and $\omega$, $A$ increases with the increase of the *charge Q* and the amplitude $a$, $W$ increases with the increase of the charge $q_1$ and $q_2$; to increase $W$, $\omega$ and $q_1$ and $q_2$ need to be increased, and $r$ needs to be decreased; to increase the attraction force and the interaction energy between the oscillating nuclei, the electric quantity and the amplitude of the charge which produces the incident light need to be increased.

When the nucleon beams are colliding with each other, the high frequency light will be directed at the nucleon beams; the distance between the two oscillating nuclei when they are colliding is far shorter than the wavelength of the incident light, the oscillating nucleon lies in the near-zone fields of each other's; the electric dipole moments of the two oscillating nuclei act along the same line and in the same direction

Because resonance will occur when $\omega = \omega_0$, one can measure the natural frequency $\omega_0$ of the nucleon 2; $A$ can be controlled, $q_1$ and $q_2$ are known, so $\omega$ and $r$ can be known, and r relates to the kinetic energy of the nuclei, therefore the kinetic energy of the nuclei which the nuclear fusion requires can be determined.

In the photoelectric effect, where the electron has a negative charge, and the nucleon has a positive charge, there is an attraction force between the electron and the nucleon, but when the light's frequency is high enough it will eject the electron.

Apparently, when the light is directed at the electrons and the nuclei, it is the repulsion force between the oscillating electrons and the oscillating nuclei, and so the repulsion force will be greater than the attraction force, so the electrons will be ejected from a metal plate.

Therefore, in analogy with the photoelectric effect, another embodiment of the invention generally comprises the following steps and requirements:

(1) measure the work function of relevant metal of the nucleon 2; (2) calculate the frequency of the incident light and the kinetic energy of the nuclei which the nuclear fusion requires..

When the high density electrons beam and the high density light nuclei beam are colliding with each other, the high frequency light will be directed at the high density electrons beam and the high density light nuclei beam, there will be a repulsion force between the oscillating electron and the light nucleon, when the repulsion force is greater than the Coulomb repulsion between the two light nuclei, the two light nuclei will fuse together. It is also applicable for the light nuclei beam and the heavy target atoms; when the light nuclei beam are bombarding the heavy target atoms, the light will be directed at the light nuclei beam and the heavy target atoms.

To sum up, the nuclear fusion is controlled by controlling the kinetic energy and density of the nuclei or electrons, and by controlling the electric field intensity and the frequency of the incident light.

BRIEF DESCRIPTION OF THE DRAWINGS

FIG.1 shows the electric dipole moments of the two oscillating nuclei act along the same line and in the same direction along r, it is an attraction force between the two oscillating nuclei.

FIG.2 shows the electric dipole moment of the oscillating nucleon and the electric dipole moment of the oscillating electron act along the same line but in the opposite direction along $\vec{r}$, it is a repulsive force between the oscillating electron and the oscillating nucleon 1.

DETAILED DESCRIPTION

One embodiment of the invention generally comprises the following steps and requirements:

Suppose the nucleon 1 is the $^6Li$ and the nucleon 2 is the $^2H$.

When the $^6Li$ and the $^2H$ are colliding with each other, the high frequency light will be directed at the $^6Li$ and the $^2H$.

According to the Eq. (26), the interaction energy between the oscillating electron and the oscillating $^6Li$ is $W_e$, ejecting an electron from Lithium which requires a minimal threshold frequency $\omega$ and minimal threshold energy of $W_p$,

$$\omega = 5.14 \times 10^{14}\, Hz\,,\quad W_p = 2.13 eV \qquad (27)$$

However, when $W_e \geq W_p$, the electrons will be ejected from Lithium metal plate.

According to the Eq. (26),

$$\frac{1}{\sqrt{(\omega_0^2 - \omega^2)^2 + \omega^2\gamma^2}}(\frac{Aq_e^2 q_1 l_1 \omega^2 \cos^2 \omega t}{2m_e \pi \varepsilon_0 r^3} + \frac{q_e^2}{4m_e}\frac{q_1^2 l_1^2 \cos^2 \omega t}{\pi^2 \varepsilon_0^2 r^6}) \geq 2.13eV \qquad (28)$$

When the electron is inside the atom, $r \approx 10^{-10}m$, $l_1 \approx 10 \approx^{-16}m$, $\omega = 5.14 \times 10^{14}Hz$, $m_e = 0.91 \times 10^{-30}kg$.

This means that the electron is a bound electron, $\omega_0 \neq 0$, in spite of $\omega << \omega_0$ or $\omega = \omega_0$,

$$\frac{1}{\sqrt{(\omega_0^2 - \omega^2)^2 + \omega^2\gamma^2}}\frac{q_e^2}{4m_e}\frac{q_1^2 l_1^2 \cos^2 \omega t}{\pi^2 \varepsilon_0^2 r^6} << 2.13eV \qquad (29)$$

Therefore

$$W_e \approx \frac{1}{\sqrt{(\omega_0^2 - \omega^2)^2 + \omega^2\gamma^2}}\frac{Aq_e^2 q_1 l_1 \omega^2 \cos^2 \omega t}{2m_e \pi \varepsilon_0 r^3} \geq 2.13eV \qquad (30)$$

$$\frac{1}{\sqrt{(\omega_0^2 - \omega^2)^2 + \omega^2\gamma^2}}\frac{Aq_e^2 q_1 l_1 \cos^2 \omega t}{2\pi \varepsilon_0} \geq \frac{2.13eV * r^3 * m_e}{\omega^2} \qquad (31)$$

$$\frac{1}{\sqrt{(\omega_0^2 - \omega^2)^2 + \omega^2\gamma^2}}\frac{Aq_e^2 q_1 l_1 \cos^2 \omega t}{2\pi \varepsilon_0} \geq \frac{2.13eV * 10^{-30}m * 0.91 \times 10^{-30}kg}{(5.14 \times 10^{14})^2} \qquad (32)$$

For $^6Li$ and $^2H$, similarly, one has

$$\frac{1}{\sqrt{(\omega_0^2 - \omega^2)^2 + \omega^2\gamma^2}}\frac{q_2^2}{4m_2}\frac{q_1^2 l_1^2 \cos^2 \omega t}{\pi^2 \varepsilon_0^2 r^6}) << 2.13eV \qquad (33)$$

and where $m_2$ is the mass of the $^2H$, $m_2 = 3.34 \times 10^{-27}kg$.

To let $^2H$ and $^6Li$ fuse together, it needs

$$W \approx \frac{1}{\sqrt{(\omega_0^2 - \omega^2)^2 + \omega^2\gamma^2}}\frac{Aq_2^2 q_1 l_1 \omega^2 \cos^2 \omega t}{2m_2 \pi \varepsilon_0 r^3} \geq \frac{q_1 q_2}{4\pi \varepsilon_0 R_f} \qquad (34)$$

where $R_f \leq 10^{-15}m$.

Because

$$\frac{1}{\sqrt{(\omega_0^2 - \omega^2)^2 + \omega^2\gamma^2}}\frac{Aq_e^2 q_1 l_1 \cos^2 \omega t}{2\pi \varepsilon_0} \geq \frac{2.13eV * 10^{-30}m * 0.91 \times 10^{-30}kg}{(5.14 \times 10^{14})^2} \qquad (35)$$

To let $^2H$ and $^6Li$ fuse together, it needs

$$\omega \geq 5.14 \times 10^{17} Hz \qquad (36)$$

$$r \le 10^{-12} m \quad (37)$$

but where $r=10^{-12}m$,

$$\frac{q_2 q_1}{4\pi\varepsilon_0 * 10^{-12}} = 6.9 \times 10^{-16} J \quad (38)$$

Where the Coulomb barrier between the $^2H$ and the $^6Li$ is $6.9 \times 10^{-16}J(4.3keV)$.

Accordingly, the kinetic energy $w$ of the $^2H$ and the $^6Li$ needs to be

$$w \ge 3.45 \times 10^{-16} J(2.15keV) \quad (39)$$

The light whose the frequency $\omega \ge 5.14 \times 10^{17}Hz$ will be directed at the $^2H$ and the $^6Li$, when the kinetic energy of the $^2H$ and the $^6Li$ is $w \ge 2.15keV$, and their distance is $r \le 10^{-12}m$, the $^2H$ and the $^6Li$ will fuse together,

$$^6Li + {}^2H \to 2\,{}^4He + 22.4MeV \quad (40)$$

From the Eqs. (2), (19), and (26), one can ascertain that $W$ and $W_e$ will increase with the increase of $A$ and $\omega$, as $A$ increases with the increase of the charge $Q$ and the amplitude $a$.

Therefore, if $Q$ increases by a factor of 1000 and $a$ increases 100 times, when the light whose the frequency is $\omega \ge 5.14 \times 10^{16}Hz$, the kinetic energy of the $^2H$ and the $^6Li$ is $w \ge 0.215keV$, their distance is $r \le 10^{-11}m$, the $^2H$ and the $^6Li$ will fuse together.

Another embodiment of the invention generally comprises the following steps and requirements:

Because the electron has a negative charge, and the $^2H$ has a positive charge, there is an attraction force between the electron and the $^2H$, the distance between the $^2H$ and the electron can be very close.

If the distance between the $^2H$ and the electron is close enough, the repulsive force between the oscillating electron and the oscillating $^2H$ will be stronger than the repulsive force between the two $^2H$,

$$F_e \approx \frac{1}{\sqrt{(\omega_0^2 - \omega^2)^2 + \omega^2\gamma^2}} \frac{3Aq_e^2 q_{1_1} \omega^2 \cos^2 \omega t}{4m_e \pi \varepsilon_0 r^4} \ge \frac{q^2}{4\pi\varepsilon_0 R^2} \quad (41)$$

$$W_e \approx \frac{1}{\sqrt{(\omega_0^2 - \omega^2)^2 + \omega^2\gamma^2}} \frac{Aq_e^2 q_{1_1} \omega^2 \cos^2 \omega t}{2m_e \pi \varepsilon_0 r^3} \ge \frac{q^2}{4\pi\varepsilon_0 R} \quad (42)$$

where $F_e$ is a repulsive force between the oscillating electron and the oscillating $^2H$, $W_e$ is the interaction energy between the two $^2H$, $\frac{q^2}{4\pi\varepsilon_0 R^2}$ is the Coulomb repulsion between the two $^2H$, $\frac{q^2}{4\pi\varepsilon_0 R}$ is the Coulomb barrier between the two $^2H$, and $r$ is the distance between the $^2H$ and the electron, $R \le 10^{-15}m$.

When the distance between the $^2H$ and the electron is close enough, the high frequency light will be directed at the electron and the $^2H$, there will be an attraction force between the two oscillating $^2H$, and there will be a repulsive force between the oscillating electron and the oscillating $^2H$, the attraction force and the repulsive force will let two $^2H$ fuse together,

$$^2H + {}^2H \to {}^3H + {}^1H + 4MeV \quad (43)$$

REFERENCES

Cheng, D.K, 1989a, Field and Wave Electromagnetics, Second Edition, Addison-Wesley. pp 605.

Cheng, D.K, 1989b, Field and Wave Electromagnetics, Second Edition, Addison-Wesley. pp 604.

Jackson, J.D., 1998, Classical Electrodynamics, Third Edition, John Wiley & Sons Ltd. pp.150.

Panofsky, W. K. H., Phillips, M., 1962, Classical Electricity and Magnetism, Second Edition, Addison-Wesley Publishing Company, Inc., pp.401.

**Claims**

1. Method for achieving a light controlled nuclear fusion, said method comprising the steps:

   directing a nuclei beam towards a metal target, said metal having a relevant work function;
   measuring the natural frequency of the positive nucleons contained in the nuclei of the beam;
   directing incident light at the nuclei beam when colliding with the target, so that, when hit by the incident light, the nucleon performs a harmonic oscillation and radiates an electromagnetic wave as an oscillating electric dipole;
   adjusting the frequency and intensity of the incident light as a function of the target metal work function, so as to strip nuclei from the target with predetermined energy and density, said nuclei containing nucleons which act as oscillating dipoles;
   adjusting the kinetic energy of the colliding nuclei at a predetermined value; whereby
   the wavelength of the incident light is larger than the minimum distance of the colliding nuclei allowed by the Coulomb barrier,
   so that,
   when the electric moment of the two colliding oscillating dipoles are acting along the same line and in the same direction, an attraction force is generated between the two oscillating dipoles greater than the Coulomb barrier, thereby allowing for the fusion of the two nuclei.

2. Method for achieving a light controlled nuclear fusion, comprising:

   making electrons beam and nuclei beam collide with each other;
   directing incident light at the electrons beam and the nuclei beam when the electrons beam and the nuclei beam are colliding with each other, so that, when hit by the incident light, both the positive nucleons contained in the nuclei and the electrons perform a harmonic oscillation and radiate electromagnetic waves as oscillating electric dipoles;
   whereby
   the wavelength of the incident light is larger than the minimum distance between the colliding nucleon and the electron when colliding,
   so that,
   when the electric moment of the oscillating nucleons and the electric moment of the oscillating electrons are acting along the same line but in opposite direction, an attraction force is generated between two oscillating nucleons of the nuclei beam as a result of the repulsion force generated between an electrons and a nucleon, said attractive force being greater than the mutual Coulomb barrier between two nuclei, thereby allowing for the fusion of said two nuclei.

**Patentansprüche**

1. Verfahren zur Erreichung einer lichtgesteuerten Kernfusion, das Verfahren die Schritte umfassend:

   einen Kernstrahl auf ein Metallziel richten, das Metall weist eine relevante Arbeitsfunktion auf;
   die natürliche Frequenz der positiven Nukleonen, die in dem Kern des Strahls enthalten sind, messen;

einfallendes Licht auf den Kernstrahl richten, wenn er mit dem Ziel kollidiert, so dass, wenn von dem einfallenden Licht getroffen, das Nukleon eine harmonische Schwingung durchführt und eine elektromagnetische Welle als einen schwingenden elektrischen Dipol ausstrahlt;

die Frequenz und Intensität des einfallenden Lichts als Funktion der Zielmetallarbeitsfunktion einstellen, um Kerne von dem Ziel mit bestimmter Energie und Dichte abzureichern, die Kerne umfassen Nukleonen, die als schwingende Dipole fungieren;

die kinetische Energie der kollidierenden Kerne auf einen bestimmten Wert einstellen;

wobei

die Wellenlänge des einfallenden Lichts größer ist als der, durch die Coulombbarriere zugelassene, minimale Abstand der kollidierenden Kerne,

so dass,

wenn das elektrische Moment der zwei kollidierenden, schwingenden Dipole in der gleichen Linie und in der gleichen Richtung fungieren, eine Anziehungskraft zwischen den zwei schwingenden Dipolen erzeugt wird, die größer als die Coulombbarriere ist, wodurch die Fusion der zwei Kerne ermöglicht wird.

2. Verfahren zur Erreichung einer lichtgesteuerten Kernfusion, umfassend:

Elektronenstrahl und Kernstrahl miteinander kollidieren lassen;

einfallendes Licht auf den Elektronenstrahl und den Kernstrahl richten, wenn der Elektronenstrahl und der Kernstrahl miteinander kollidieren, so dass, wenn von dem einfallenden Licht getroffen, beide, die positiven Nukleonen in dem Kern und die Elektronen, eine harmonische Schwingung ausüben und elektromagnetische Wellen als schwingende elektrische Dipole ausstrahlen;

wodurch

die Wellenlänge des einfallenden Lichts größer als der minimale Abstand zwischen dem kollidierenden Nukleon und dem Elektron beim Zusammenstoß ist,

so dass,

wenn das elektrische Moment der schwingenden Nukleonen und das elektrische Moment der schwingenden Elektronen entlang der gleichen Linie aber in Gegenrichtung fungieren, eine Anziehungskraft zwischen zwei schwingenden Nukleonen des Kernstrahls als Folge der Abstoßungskraft, die zwischen einem Elektron und einem Nukleon erzeugt wurde, erzeugt wird, ist die Anziehungskraft größer als die gegenseitige Coulombbarriere zwischen zwei Kernen, wodurch die Fusion der zwei Kerne ermöglicht wird.

**Revendications**

1. Procédé de réalisation d'une fusion nucléaire dirigée par la lumière, comprenant les étapes consistant à:

diriger un faisceau de noyau à une cible en métal, le métal a une fonction de travail pertinente;

mesurer la fréquence naturelle des nucléons positifs contenus dans le coeur du faisceau;

diriger la lumière incidente directement sur la poutre de base comme il est en collision avec l'objectif de sorte que, lorsqu'elle est frappée par la lumière incidente, la nucléon exécute une oscillation harmonique, et émet une onde électromagnétique comme un dipôle électrique oscillant;

ajuster la fréquence et l'intensité de la lumière incidente en fonction de la fonction de travail du métal cible pour appauvrir les noyaux de la cible avec une certaine densité d'énergie et soit constitué de noyaux nucléon qui agissent comme dipôle oscillant;

régler l'énergie cinétique des noyaux en collision à une certaine valeur; dans lequel

la longueur d'onde de la lumière incidente est supérieure à la distance minimale des noyaux en collision permise par la barrière de Coulomb, pour que

lorsque le moment électrique des deux dipôles oscillants agissent dans la même ligne et dans la même direction, une force d'attraction entre les deux dipôles vibrant est produit qui est supérieure à la barrière de Coulomb, de sorte que la fusion des deux noyaux est rendue possible.

2. Procédé pour réaliser une fusion nucléaire dirigée par la lumière, comprenant:

laisser entrer en collision le faisceau d'électrons et le faisceau de noyau;

diriger la lumière incidente sur le faisceau d'électrons et le courant de base lorsque le faisceau d'électrons et le courant de base sont en collision, de sorte que lorsqu'il est frappé par la lumière incidente, à la fois les nucléons positifs dans le noyau et l'électron exercent une vibration harmonique et émettre des ondes électromagnétiques en tant que dipôles électriques vibrants;
dans lequel
la longueur d'onde de la lumière incidente est supérieure à la distance minimale entre le nucléon en collision et l'électron à l'impact,
de sort que
si le moment électrique des nucléons oscillants et le moment électrique des électrons oscillant fonctionnent le long de la même ligne mais dans le sens inverse, une force d'attraction entre deux nucléons étant en vibration est généré entre un électron et un nucléon, la force d'attraction est plus grande que la barrière de Coulomb mutuelle entre deux noyaux, permettant la fusion des deux noyaux.

Light

Light

$P_1$

$\vec{r}$

$P_2$

$P_1$ and $P_2$ are acting the same line and in the same direction of $\vec{r}$

FIG.1

Light

Light

$P_i$　　$\overrightarrow{r}$　　$P_e$

$P_i$ and $P_e$ are acting along the same line but in the opposite direction of $\overrightarrow{r}$

## FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2011081670 W

### Non-patent literature cited in the description

- **DITMIRE et al.** Nuclear fusion from explosions of femtosecond laser-heated deuterium clusters. *NATURE,* 08 April 1999, vol. 398 (6727), ISSN 0028-0836, 489-492
- **CHENG, D.K.** Field and Wave Electromagnetics. Addison-Wesley, 1989, 605
- **CHENG, D.K.** Field and Wave Electromagnetics. Addison-Wesley, 1989, 604
- **JACKSON, J.D.** Classical Electrodynamics. John Wiley & Sons Ltd, 1998, 150
- **PANOFSKY, W. K. H. ; PHILLIPS, M.** Classical Electricity and Magnetism. Addison-Wesley Publishing Company, Inc, 1962, 401